Europäisches Patentamt

European Patent Office

Office européen des brevets

(19)

(11) Publication number: **0 164 680**
**A2**

(12) # EUROPEAN PATENT APPLICATION

(21) Application number: **85106883.3**

(22) Date of filing: **04.06.85**

(51) Int. Cl.⁴: **G 02 B 21/06**

(30) Priority: **05.06.84 JP 115140/84**

(43) Date of publication of application:
**18.12.85 Bulletin 85/51**

(84) Designated Contracting States:
**AT CH DE FR GB LI**

(71) Applicant: **OLYMPUS OPTICAL CO., LTD.**
**43-2, 2-chome, Hatagaya Shibuya-ku**
**Tokyo 151(JP)**

(72) Inventor: **Morita, Terumasa**
**Koyasu-cho 3-17-6**
**Hachiouju-Shi Tokyo(JP)**

(72) Inventor: **Miyahara, Noriyuki**
**Oowada-cho 4-22-13**
**Hachiouji-shi Tokyo(JP)**

(74) Representative: **Patentanwälte Dipl.-Ing. J. Richter**
**Dipl.-Ing. F. Werdermann**
**Neuer Wall 10**
**D-2000 Hamburg 36(DE)**

(54) **Integrated photometric microscope system.**

(57) In a microscope observation, in order to make it possible to correctly and unexpensively measure a light for various purposes with a simple operation, an integrated photometric microscope system provided with a plurality of kinds of illuminating means, a plurality of kinds of wave length selecting means, a plurality of kinds of photoelectric converting means, a system controller integrating these respective means as related with one another when the selected respective one illuminating means, wave length selecting means and photoelectric converting means are attached to the microscope body, a remote controller connected to the system controller and a host computer connected to the system controller through an interface.

EP 0 164 680 A2

Croydon Printing Company Ltd.

Integrated Photometric Microscope System

This invention relates to an integrated photometric microscope system.

There are already such photometric microscopes as 1) a transmitted light spectrophotometric microscope, 2) an incident light (reflected light) spectrophotometric microscope, 3) a fluorescence spectrophotometric microscope and 4)a fluorescence quantitative photometric microscope. 1) is to be used to measure the light absorption of a biotric sample or the transmissibility of a microfilter in the industry while varying the wave length. 2) is to be used to analyze the reflection rate of a metal surface or of such IC or the like as inked,stamped,plated or deposited while varying the wave length of incident or reflected light. 3) is to be used to spectroscopically measure a fluorescent light generated by irradiating a biotric sample or a fluorescent substance with an excitation light by varying the wave length to analyze the molecular formation of the internal structure of the sample. 4) is to be used to measure the intensity of the fluorescent light coming out of the same sort of sample as in 3) at a predetermined wave length to judge the state, composition and nature of the sample by the difference in the fluorescent light intensity.

The users of these devices often have various kinds of such measuring subjects as are described above. For example, a light absorbing degree is measured by measuring the light transmissibility of a sample and then a fluorescent light is spectroscopically measured. The light transmissibility is measured and then the reflected light is measured. The fluorescent light is spectroscopically measured and then the total amount of the fluorescent light is measured. Also, the device itself is often shared by a plurality of people. The respective users such as researchers often desire to use the device for different purposes.

However, the conventional photometric microscope is often a single function device provided with only the function of one of the devices 1) to 4) above. The user is required to purchase every kind of devices for each purpose. This is not only uneconomical but is also often hard to handle because the methods of using the respective devices are not unified methodically.

Therefore, in order to eliminate such defects, there is such device as is mentioned, for example, in Japanese Utility Model Publication Sho 54-42913 wherein the optical system is devised to combine transmitted light and incident light (reflected light) optical systems with a light source so as to switch them to suit various usage objects. However, this combination makes the device complicate or particularly the optical system so much as to be likely to be costly and to reduce the optical performance. Further, this optical system has problems that a spectroscopic system for making a monochromatic light is inserted on the light source side, therefore a spectroscopic system must be newly provided on the light measuring side for the purpose of the spectral measurement and quantitative measurement of a fluorescent light und it is inconvenient and uneconomical.

There is also a photometric microscope system where such respective component elements as a light source, illuminating system, spectral system und photoelectric converting system are combined as a unit so as to be able to form various photometric microscopes. However, this has problems that the respective component elements are not related with one another, many operating members in many positions must be operated, as a result, not only the operation is very complicated but also misoperations often occur and it is difficult to check the misoperation.

In view of the above mentioned problems, a primary object of the present invention is to provide an economical integrated photometric microscope system which can be used by a simple operation without errors and wherein lights are measured for various purposes by combining a microscope body with respective light measuring units and the respective units operate as organically related with one another.

The photometric microscope system according to the present invention is provided with a plurality of kinds of such illuminating means for projecting a light measuring illumination light or excitation light as, for example, a transmitted light illumination unit, incident light (reflected light) illumination unit or fluorescence illumination unit , such wave length selecting means having a wave length selecting function as, for example, a filter or spectroscope and such photoeletric converting means as, for example, a photoeletronic multiplying tube, photodiode or photoeletroconductor and with a system controller which combines any proper kinds of means for the purpose selected from among the above mentioned respective means with the microscope body and organically relates and integrates such means.

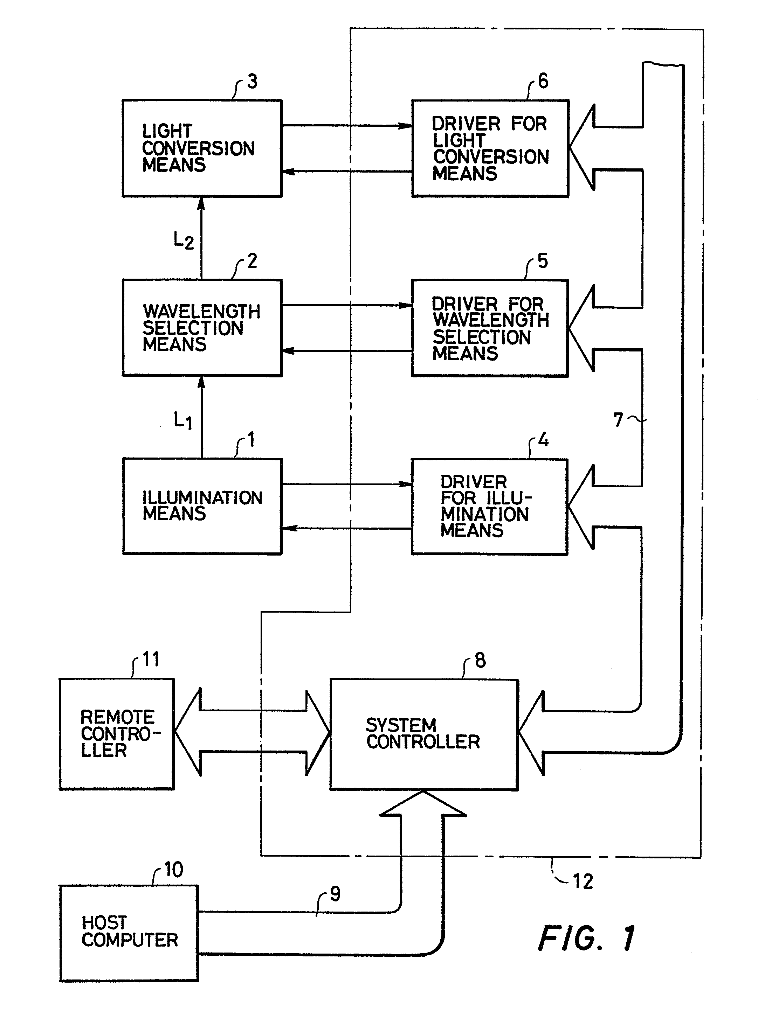

Fig. 1 is a block diagram showing a summary of the present system. The reference numeral 1 represents an illuminating means for projecting a light measuring illumination light or excitation light so that a light $L_1$ applied to a sample from the illuminating means will enter a wave length selecting means (spectral means) 2. The wave length selecting means 2 is to enable the light measuring light to be selected with the wave length and is a grating spectroscope, prism spectroscope or filter so that a light $L_2$ of a specific wave length selected by the wave length selecting means 2 will enter a light converting means 3 which is to convert a light to be measured to an electric signal and send it to a data processing system and is not only such visible light photoelectric converter as as photoelectronic multiplying tube or photodiode but also an ultraviolet or infrared photoelectric converter. An illuminating means driver 4, wave length selecting means driver 5 and photoelectric converting means driver 6 are connected respectively to the above mentioned respective means so as to transmit and receive various signals. Such input and output signals are mostly lamp and chopper controlling signals and pinhole classifying signals for the illuminating means,spectroscope driving signals and filter driving signals for the wave length selecting means 2 and shutter controlling signals and photoelectrically converted signals for the photoelectric converting means 3. Further, substantially all the states such as monitoring the operating part can be monitored through the above mentioned drivers 4,5 and 6. Also, these drivers 4, 5 and 6 are connected to a system controller 8 through a bus line 7 so that the operations of the respective drivers may be related with one another through this bus line 7. A microcomputer and memory are contained in the system controller 8 in which a program for relating the system as a whole can be contained. Also, it is possible to control the system with an outer host computer 10 through an interface 9. Further, measured date can be transferred to the host computer 10 so as to be processed. A remote controller 11 can be connected to the system controller 8 to remote-control it. The above mentioned system controller 8, bus line 7 and respective drivers 4 to 6 form one control box 12 so that the respective drivers 4 to 6 may be contained in a plug-in type in the control box 12 and may be connected to the system controller 8.

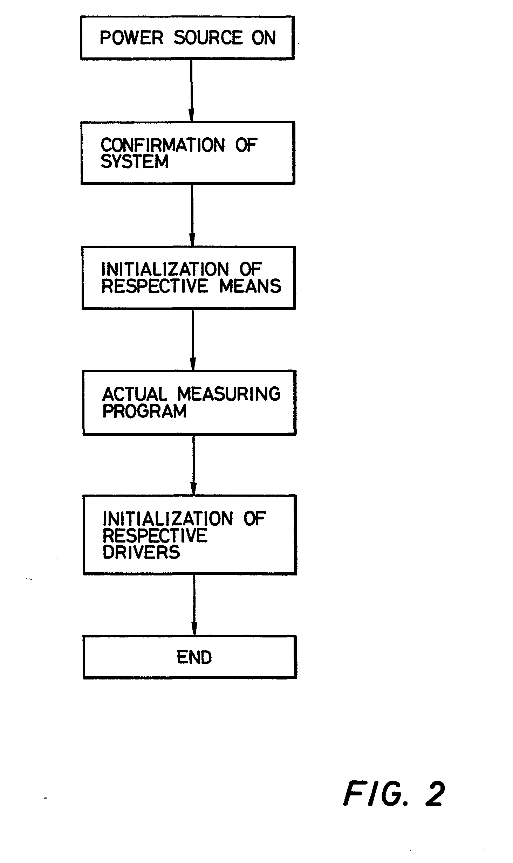

This system is operated substantially by such flow chart as is shown in Fig. 2. That is to say, when a power source is switched on, first the system will be confirmed. This may be made to detect the kind of the driver contained in the system controller 8 or to be indicated by the user. Then, the respective means will be initialized through the respective drivers to enter an actual measuring program.
After the end of the measurement, the respective drivers
will be initialized to end the operation.

Another object of the present invention is to provide an
integrated  photometric microscope system of this kind which
is comparatively simple in the structure and is not low
in the optical performance.

These and other objects of the present invention will
become more apparent during the course of the following
detailed description and appended claims.

Fig. 1 is a conceptual view of an integrated photometric
microscope according to the present invention,

Fig. 2 is a schematic flow chart showing the operation
of the system according to the present invention,

Fig. 3 is a schematic view of an embodiment of the system
of the present invention,

Fig. 4 is a view showing the above mentioned embodiment
as combined as a reflected light spectrophotometric
microscope or transmitted light spectrophotometric
microscope,

Fig. 5 is a table showing examples of a combination of a
pinhole image and diaphragm aperture,

Fig. 6  is a view showing the relation of a pinhole imgage
diameter and diaphragm aperture diameter,

Fig. 7 is a block diagram of a control box,

Fig. 8 is an elevational view of a remote controller,

Fig. 9A through 9D are elevational views showing examples
of display to indicate prompts of a remote controller,

Fig. 10 is a table showing the kinds of input and output
signals in the respective drivers as seen from a CPU board,

Fig. 11 is a part of a flow chart of a program controlling
a reflected light spectrophotometric microscope,

Fig. 12 and 13 are views showing examples of combining the
above mentioned embodiment respectively
as a fluorescence spectrophotometric microscope and
fluorescence quantitative photometric microscope.

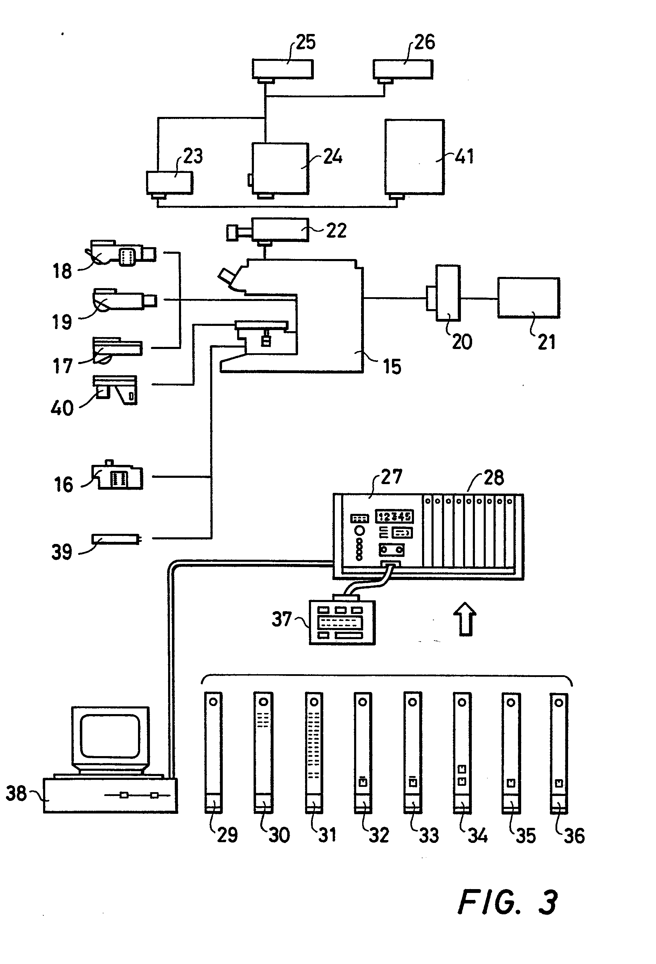

The present invention shall be explained in detail in the
following on the basis of the embodiment shown in Figs.
3 to 13. Fig. 3 is a schematic view of this embodiment.
The reference numeral 15 represents a photometric microscope
body adapted to be able to be fitted with the later described
respective units and containing such fundamental component
elements of a microscope as, for example, observation light
source, illuminating optical system, sample supporting stage
and observing optical system. The reference numeral 16
represents a transmitted light illumination unit to be
used to for a transmitted light spectrophotometry as combined
with an objective lens revolver unit 17,18 represents an
incident light illumination unit and 19 represents an incident
fluorescence illumination unit to be used as combined with
a high voltage mercury lamp house 20 and power source 21.
The transmitted light illumination unit 16, incident light
illumination unit 18 or fluorescence illumination unit 19
is an illuminating means for projecting a photometric
illumination light or exitation light. In measuring a light,
any one of them is to be selected. The reference numeral
22 represents a diaphragm (stop) which removes any of lights
unnecessary for the light meassurement from among the lights
projected by the illuminating means and transmitted through or reflected from a sample or excited as a fluorescent light from the sample, and leads only necessary lights to a spectral system above it.

The reference numeral 23 represents a filter unit which contains a plurality of interference filters and is used to select a specific wave length in measured lights. The reference numeral 24 represents such spectroscope unit as a grating spectroscope which can rotate a built-in grating (diffraction grating) to select and transmit any wave length. The filter unit 23 and spectroscope unit 24 are wave length selecting means so that either one of them will be selected in the case of measuring a light. The reference numeral 25 represents a photoelectronic multiplying tube unit and 26 represents a photon counting photoelectronic multiplying tube unit, both forming a photoelectric converting means. The photoelectronic multiplying tube unit 25 is to convert a received light intensity to a voltage signal and the photon counting photoelectronic multiplying tube unit 26 is to convert a received light intensity to a pulse train.

The reference numeral 27 represents a system controller which is contained in a system control box 28 and is to make an interface with a later described host computer, indicate data and control the system. The reference numeral 29 represents a filter unit driver, 30 represents a spectroscope unit driver, 31 represents a diaphragm unit driver, 32 represents a transmitted light illumination unit driver, 33 represents an incident light illumination unit driver, 34 represents an incident fluorescent illumination unit driver, 35 represents a photon counter and 36 represents a lock-in amplifier (to amplify a signal from the photoelectronic multiplying tube unit 25 and send a clock signal to a later described chopper). These are electrically connected respectively with the corresponding units to control the above mentioned light measuring unit. Further, these drivers 29 to 36 are plugged in th system control box 28 and are connected to the bus line running through the system control box to exchange information with the system controller 27. The reference numeral 37 represents a remote controller connected to the system controller 27 and provided with a multipurpose indication and multipurpose switch. The reference numeral 38 represents the above described host computer connected to the system controller 27 through an interface (GP.IB), 39 represents a shutter unit, 40 represents a scanning stage and 41 represents a rapid scanning unit.

Examples of combinations by the present system shall be explained in the following.

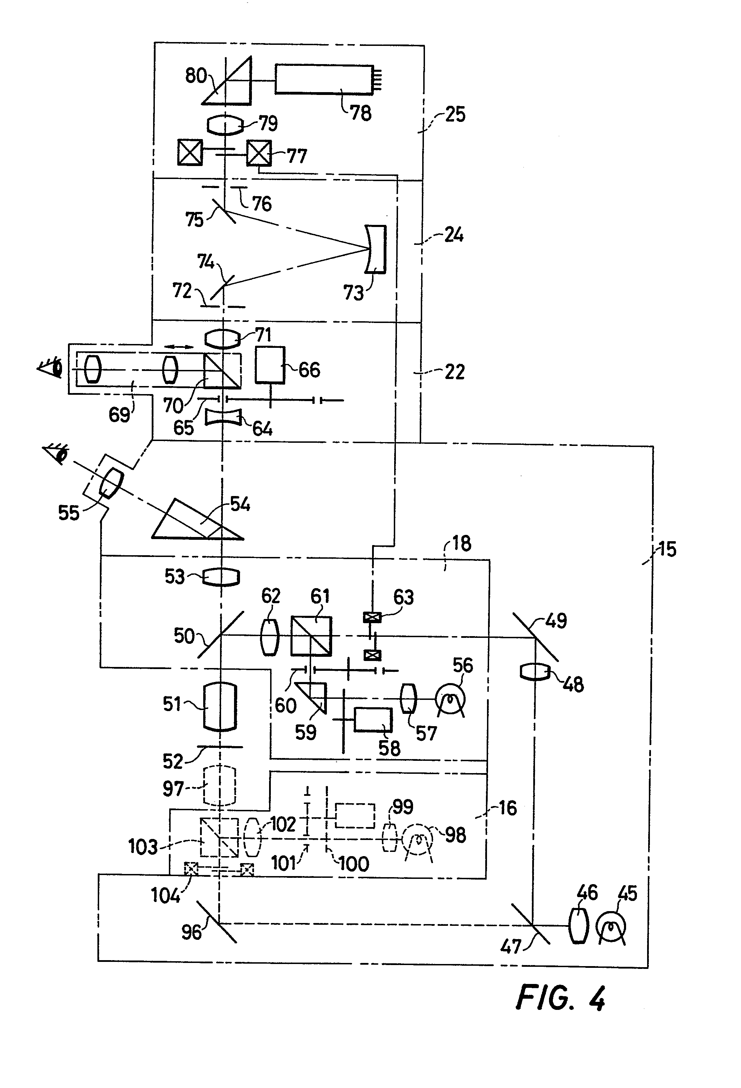

Fig. 4 shows an example of a combination of the present system as a reflected light spectrophotometric microscope, an observing illumination light source 45 being included in the microscope body 15. A light coming out of a light source 45 will be collected by a collector lens 46, will be led by a mirror 47, relay lens 48 and mirror 49, will be bent downward by a half mirror 50 placed in the observing light path and will entirely illuminate a sample 52 through an objective lens 51. The light reflected by the sample 52 will be again collected by the objective lens 51, will pass through the half mirror 50 and will be led to an eyepiece 55 through an image forming lens 53 and prism 54 so as to be observable with an eye. On the other hand, a light coming out of a light measuring light source 56 within the incident light illumination unit 18 will be collected by a collector lens 57 and will be made an intermittent light by a chopper 58. This chopper 58 is to apply an alternating current modulation to the light to improve the S/N ratio of the measured light in a feable light range. Then the light will be bent by a prism 59 to illuminate a pinhole of a pinhole turret 60 having a plurality of pinholes of various sizes arranged on the peripheral part, so that any pinhole may be selected and inserted into the light path by rotating it. The light limited by this pinhole will be mixed with the observing illumination light by a half prism 61 and will be led by an illuminating lens 62 to form a pinhole image on the sample 52 through the half mirror 50 and objective lens 51. In this state, the observed image will be illuminated by the entire illuminating light over the entire visual field and the image of the pinhole illuminated by the light measuring light source 56 will appear to be small and bright in the visual field.

In order to make a light measuring arrangement, first of all, the prism 54 is retracted out of the light path to lead the light to the upper light measuring system. By the way, it is needless to say that, if the prism 54 is made a half prism, it may be left fixed without being retracted out of the light path. The entire illuminating light is a light unnecessary for the light measurement and is therefore intercepted by a shutter 63 arranged in the entire illumination light path so that only the light for the light measurement may be projected onto the sample 52. The measuring light reflected by the sampel 52 will form a pinhole image on a diaphragm of a diaphragm turret 65 within the diaphragm unit 32 through the objective lens 51, image forming lens 53 and relay lens 64. The diaphragm turret 65 has a plurality of diaphragm apertures of various sizes arranged on the peripheral part the same as in the pinhole turret 60 so that any diaphragm may be inserted into the light path when the turret 65 is rotated by an electric motor 66.

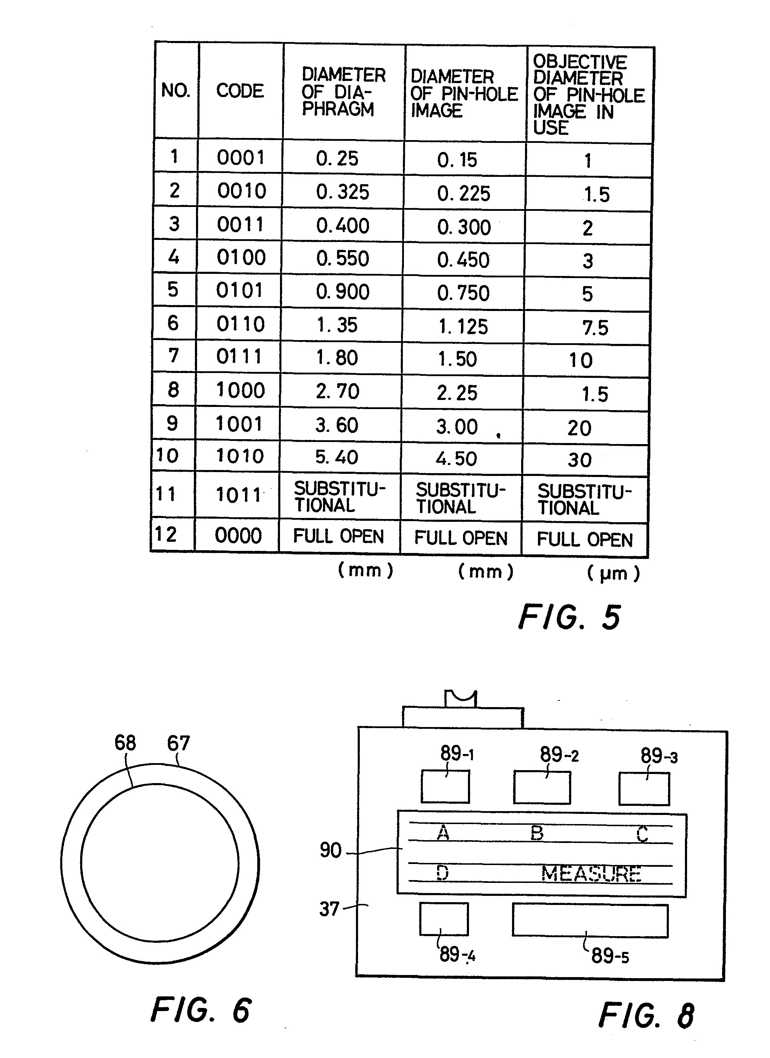

It is necessary that the diameter of this diaphragm aperture should be somewhat larger than the diameter of the pinhole image formed in this position, because, if the diameter of the diaphragm aperture is smaller, the measuring range will be limited but, on the other hand, if the diameter

0164680

of the diaphragm aperture is larger than is necessary, such stray light as a flare around the pinhole image will be picked up and will cause a light measuring error. When the pinhole turret 60 within the incident light illumination unit 18 is rotated, a code corresponding to the pinhole in the light path will be put out and the diaphragm corresponding to this code will be put into the light path by rotating the diaphragm turret 65. This relation is shown in the table in Fig. 5. In this table, there are shown diaphragm diamters, pinhole image diamters, codes and pinhole image diameters on the sample 52 in case a 100 X objektive lens is used. Fig. 6 shows a diaphragm aperture 67 and pinhole image 68, the diameter of the diaphragm aperture 67 being set to the somewhat larger than that of the pinhole image 68. By the way, the method of operatively connecting the diaphragm diameter with the pinhole image diameter through the code shall be explained when the later described control box is explained and therefore shall not be explained here. Further, it is necessary that the diaphragm aperture 67 and pinhole image 68 should be concentric with each other and therefore, as required, a centering telescope 69 fitted with a prism 70 at the far end is inserted into the light path to center the pinhole image 68 while observing such image as is shown in Fig.6.

The light having had the unnecessary part removed by the diaphragm aperture 67 will be projected onto an entrance slit 72 of the spectroscope unit by a lens 71. At this time, the pinhole image will be formed on the entrance slit 72 and an actually effective wave length dissolving activity will be determined by the size of the pinhole image. A grating 73 is set in the spectroscope unit 24 so that the measured light may be led onto the grating 73 by a mirror 74. The light dispersed by the grating 73 will be led to an exit slit 76 by a mirror 75 so that a specific wave length may be taken out. The width of the exit slit 76 is to be sensed by a sensor not illustrated so that the relation with the diameter of the pinhole image formed on the entrance slit 72 may be always monitored and any improper combination may be warned by a buzzer or the like. The move length can be changed by rotating the grating 73 to change its angle. The light coming out of the exit slit 76 of the spectroscope unit 24 will enter the photoelectronic multiplying tube unit (photomultiplier unit) 25. A shutter 77 is provided at the entrance of the photoelectronic multiplying tube unit 25 so as to operate to intercept a careless strong light to protect a photoelectronic multiplying tube 78. This shutter 77 is operatively connected with an entire illumination shutter 63 of the incident light illumination unit 18 so as to open only when the entire illumination shutter 63 is closed. The light from the spectroscope unit 24 will be led to the photoelectronic multiplying tube 78 through the shutter 77, relay lens 79 and prism 80.

As in the above, the light coming out of the light measuring light source 56 will be projected onto the sample 52 and the reflected light will be divided by the spectroscope unit 24 and will be led to the photoelectronic multiplying tube 78 to be converted here to an electric signal and taken out.

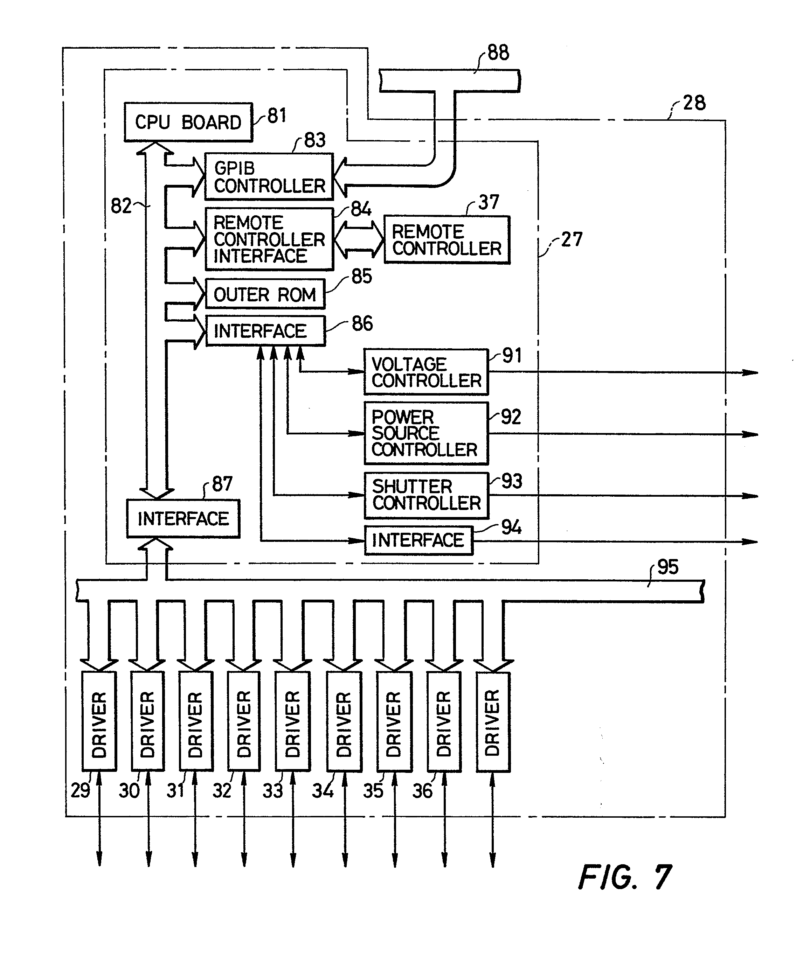

In the following, the control box 28 to control the above mentioned mechanical optical system shall be explained. Fig. 7 is a block diagram of the control box 28 which is formed of the system controller 27 forming a main part and other plug-in type driver group. The system controller 27 contains a CPU board 81 including a microcomputer, RAM and ROM. An inner bus 82 comes out of this CPU board 81 and has a GPIB controller 83, remote controller interface 84 for the remote controller 37, outer ROM 85, fundamentally controlling interface 86 and outer bus interface 87 connected to it. The GPIB controller 83 is a controlling circuit when sending in a GPIB command from the host computer 38 through a GPIB interface 88 from outside. The entire system can be controlled by interpreting this GPIB command with the CPU board 81.

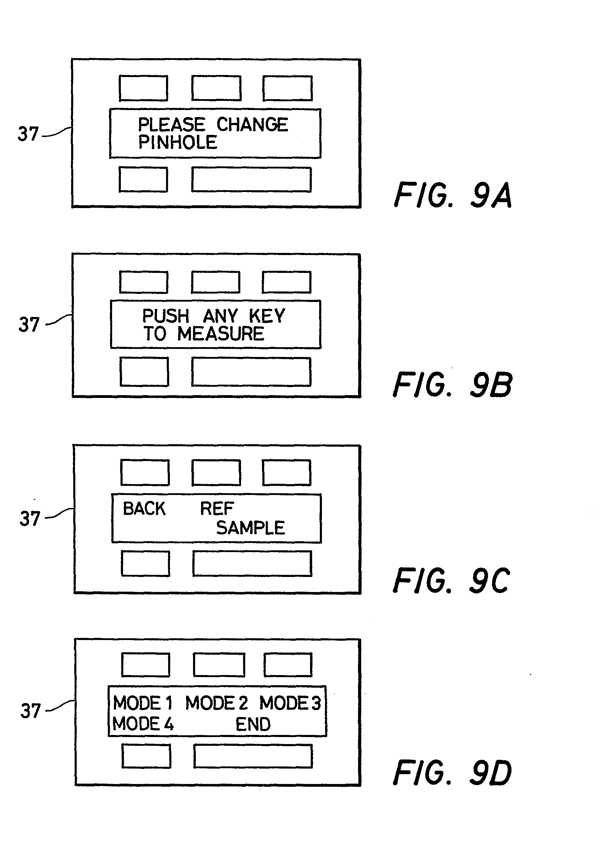

The remote controller 37 presents such appearance as is shown in Fig. 8 and is formed of switches 89-1 to 89-5 and a character display 90 consisting of a liquid crystal, LED or the like. The character display 90 can be used to indicate on it a message for the user or menus corresponding to the positions of the switches 89-1 to 89-5 for the user so select the menu. Examples manners of using the character display are shown in Figs. 9A through 9D. Fig. 9A is of an example of utilizing it merely as a character display by indicating any message to induce the user to act. Fig. 9B is of an example of using it as a remote controller of one key indicating that, if any key is pushed, a measurement will begin . Fig. 9C is of an example that a measurement can be made while distinguishing the object to be measurement to set a 100% level and sample measurement when measuring an object to be measured can be respectively selected by pushing the nearest switches in a transmitted light measurement or incident light measurement. Fig. 9D is of an example that, in case there are several kinds of measuring modes and any desired mode is to be selected from among them, for example, either of the modes of a transmitted light measurement and incident light measurement will be able to be selected. Thus, depending on the using modes and on the respective steps of the measurement operation even in the same mode, the character display can be variously used and is therefore very effective in such case as in the system of the present invention wherein combinations corresponding to various modes can be formed and the operating panels can not be determined to be uniform. By the way, this remote controller 37 is connected with the control

- 13 -                                     0164680

box 28 through a cord so as to be able to be used as placed near the microscope body 15 (Fig.3).

The outer ROM can be simply replaced from outside the control box 28 and can be replaced by putting in a new program in changing the specification of the present system. The fundamentally controlling interface 86 has a controller 91 for controlling the voltage to be applied to the photoelectronic multiplying tube, power source controller 92 for the light measuring light source, shutter controller 93 and microscope interface 94 for moving the prism 54 (Fig.4) within the microscope body 15 each connected to it to control the fundamental parts as of a photometric microscope. The respective drivers 29 to 36 of the light measuring unit are connected to the outer bus interface 87. In the example of the combination shown in Fig. 4, the incident light illumination unit driver 33, diaphragm unit driver 31, spectroscope unit driver 30 and lock-in amplifier 36 are used. The respective drivers 29 to 36 are connected with one another through an outer bus line 95 and some local lines and are connected with an inner bus 82 through an outer bus interface 87 to exchange data with the CPU board 81.Therefore, the respective drivers 29 to 36 can be operated as related with one another.

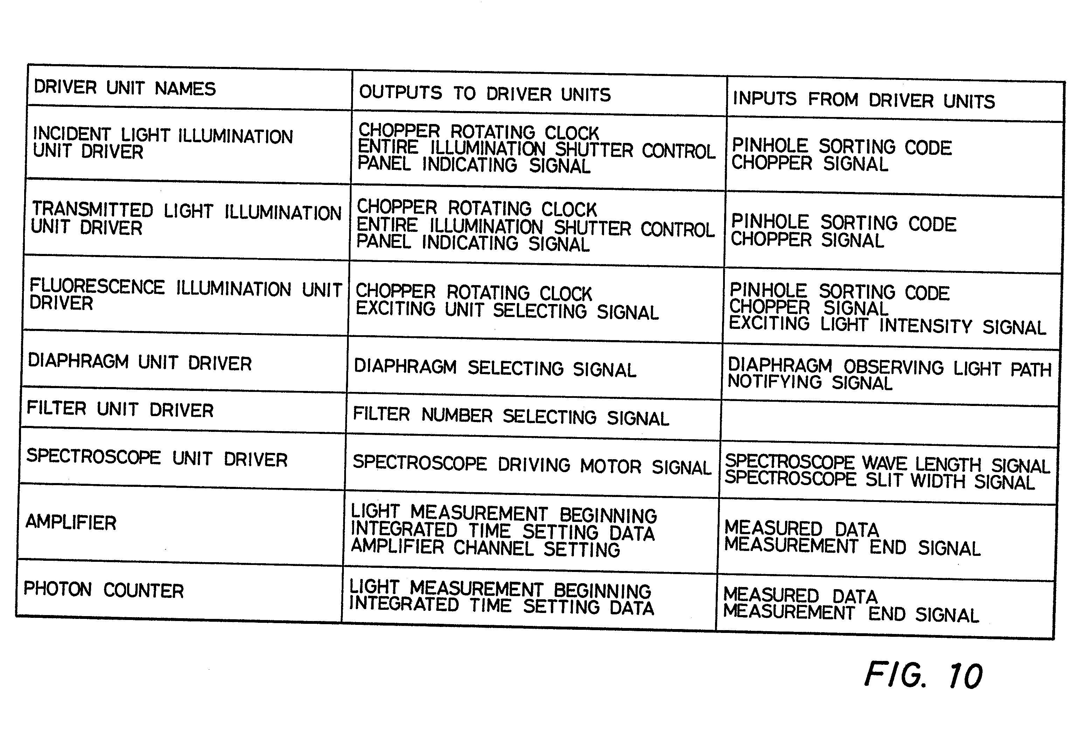

The typical input and output signals of the drivers as seen from the CPU board 81 side are as shown in Fig. 10. The respective drivers transmit and receive signals showing whether the drivers are connected on the outer data bus or not and BUSY signals showing that the electric moving part is operating besides the signals shown in Fig. 10 so that the self-recognition of the combination and the set up of the combination may be sensed on the CPU board 81 side.

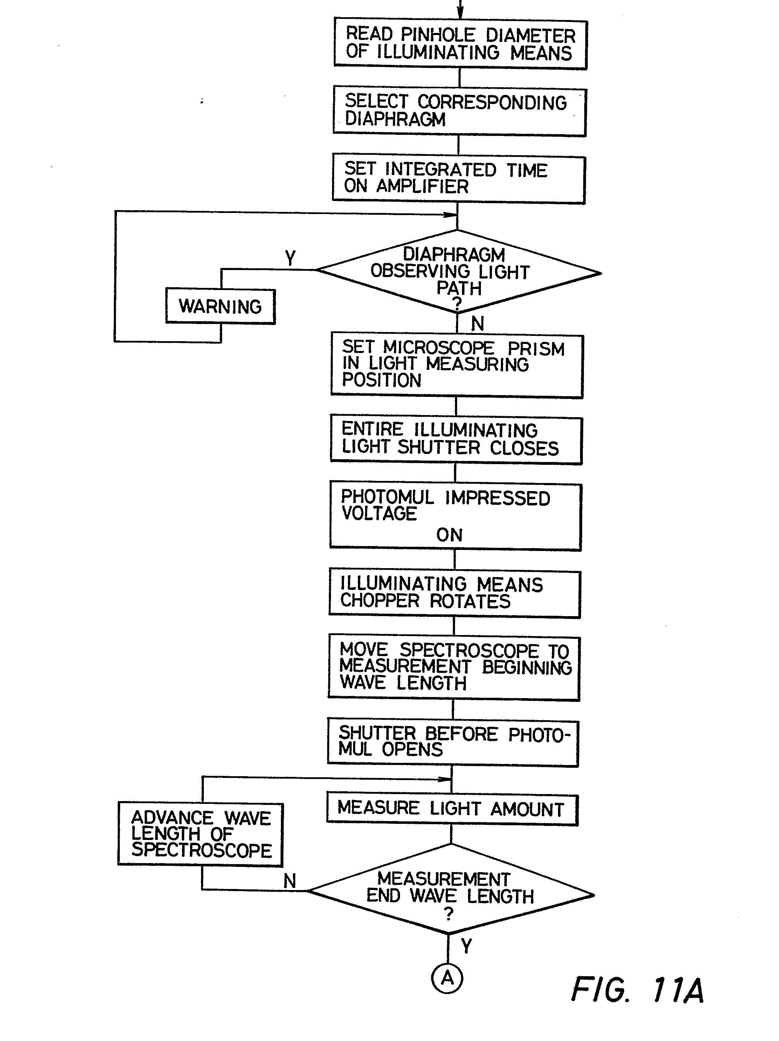

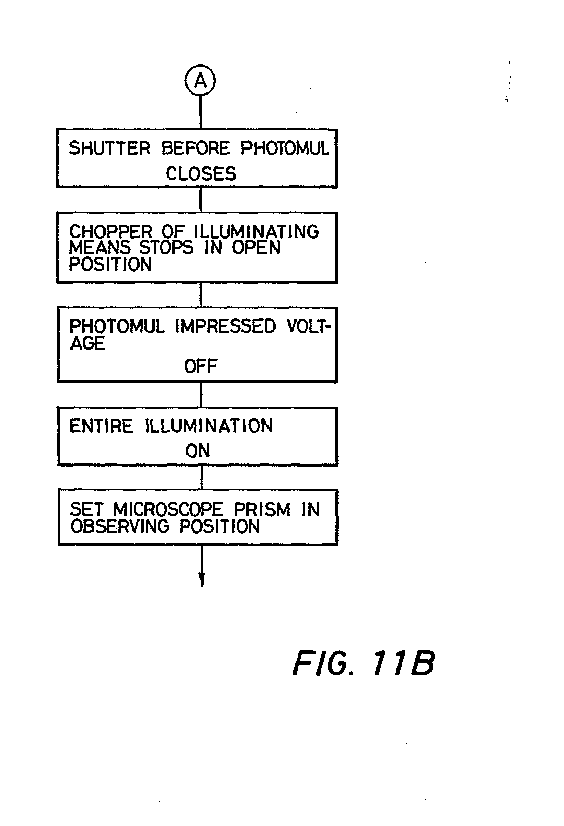

Fig. 11 is a part of a flow chart of a program for controlling the above mentioned incident light spectrophotometric microscope. The operation necessary for the light measurement can be repeatedly made without any misoperation and therefore such accident by the misuse of the device as, for example, the deterioration of the photoelectronic multiplying tube (photomultiplier) by applying a strong light while applying a high voltage to the multiplying tube can be prevented. Also, such trouble that the light can not be measured because the pinhole image diamter and diaphragm aperture diamter are not proper to each other and the movement of the prism is forgotten can be prevented. That is to say, by only switching on the measurement beginning switch, the measurement can be made. This program may be stored in the outer ROM 85 shown in Fig. 7 and can be controlled by the host computer 38 through the GPIB interface 83.

Now, returning to Fig. 4, an example of combining the present system as a transmitted light spectrophotometric microscope shall be explained. Shown by the dotted lines in Fig. 4 are parts to be changed for the transmitted light measurement. The light coming out of the observation light source 45 will be collected by the lens 46. In the case of this combination, as there is no mirror 47, the light will be led to a mirror 96 and will illuminate the sample 52 from below through a condenser lens 97. On the other hand, there is a light measuring light source 98 in the transmitted light illumination unit 16. The light coming out of this light source 98 will be collected by a lens 99 and will be modulated by a chopper 100 to illuminate a pinhole 101. Further, this light will be led to the condenser lens 97 through a lens 102 and half prism 103 to form a pinhole image on the sample 52 from below. In the case of measuring the light, a shutter 104 will be closed to intercept the entire observation light and only the light measuring light will be applied to the sample 52. The action of this transmitted light illumination unit 16 is different in the illuminating direction but is fundamentally the same as the action of the incident light illumination unit and the progress of the light in the later light measuring system is exactly the same. It is needless to say that the diameter of the pinhole image by the transmitted light illumination unit 16 is the same as the diameter of the pinhole image by the incident light illumination unit 18 and is in the relation of the pinhole image diamter with the diaphragm aperture diamter. Further, the transmitted light illumination unit driver 32 is prepared for this transmitted light illumination unit 16. When this driver 32 is connected to the outer bus line 95 of the conrol box 28 and a proper program is contained, the same as in the case of the incident light illumination unit 18, the control will be possible while maintaining a close relation with other units.

Thus, by only adding the transmitted light illumination unit 16 and its driver 32 to the incident light spectrophotometric combination and changing the program, it can be changed to a combination capable of the transmitted light spectrophotometry. Also, in the present example, the incident light illumination unit 18 is used to collect the transmitted light from the sample 52 but, if this unit 18 is changed to the revolver unit 17 for only collecting the transmitted light, a combination of only the transmitted light spectrophotometry will be able to be simply formed.

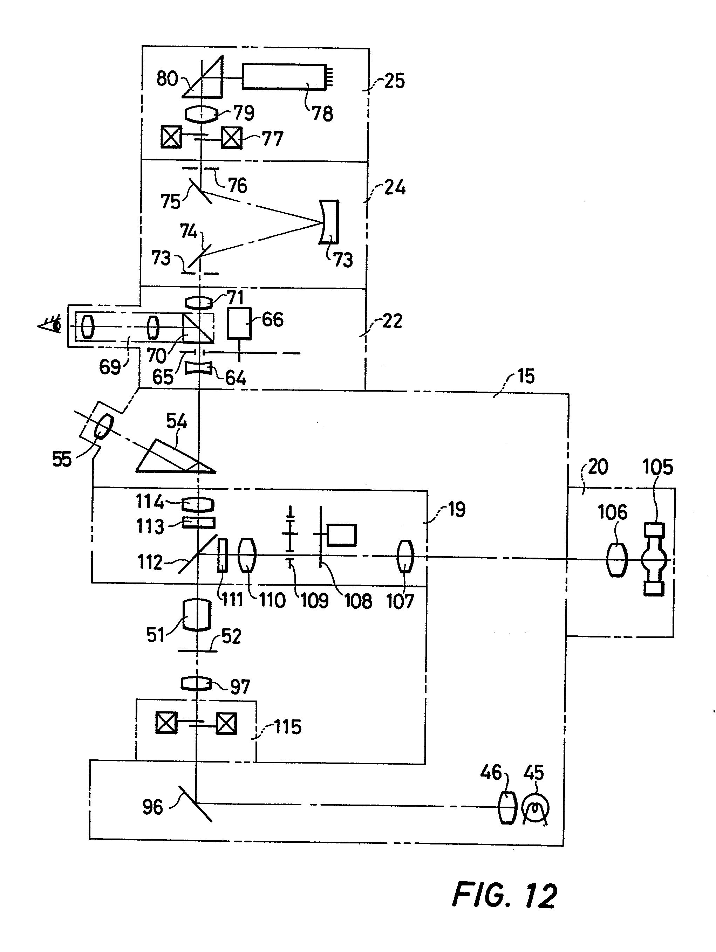

Fig. 12 shows an example of the case of combining the present system with a fluorescence spectrophotometric microscope. The incident fluorescence illumination unit 19 is fitted instead of the incident light illumination unit 18 in Fig. 4. The light coming out of a high voltage mercury lamp 105 within the lamp house will be collected by a collector lens 106 and will be transmitted through a relay lens 107 and chopper 108 as in the previous example to illuminate a pinhole of a pinhole turret 109. The light coming out of the pinhole will be transmitted through a relay lens
110 and excitation filter 111, will become a fluorescence
exciting light and will enter the objective lens 51 trough
a dichroic mirror 112 to form a pinhole image on the sample
52. The entire image may be observed by excepting the pinhole
out of the light path or by using a transmitted light from
below. The transmitted light from below can be radiated
from below through the lens 46, mirror 96 and condenser
lens 97 by using the light source 45 within the microscope
body 15. The fluorescent light coming out of the sample
52 will be led to the upper observation and light measuring
system through the dichroic mirror 112, barrier filter 113
and relay lens 114. The methods of observing and spectrally
measuring this light are the same as in the examples of
combinations in the incident light and transmitted light
spectrophotometries in Fig. 4 and therefore shall not be
explained here. A plurality of the excitation filters 111,
dichroic mirrors 112 and barrier filters 113 within the
incident fluorescence illumination unit 19 are combined
in confirmity with the fluorescence sample to be measured,
are connected to the system controller 27 within the control
box 28 through the incident fluorescence illumination unit
driver 34 and can be freely controlled by the program. A
shutter 115 is located in the transmitted light illumination
light path from below to protect the light measuring system
lest a strong light should come in when the light is measured.

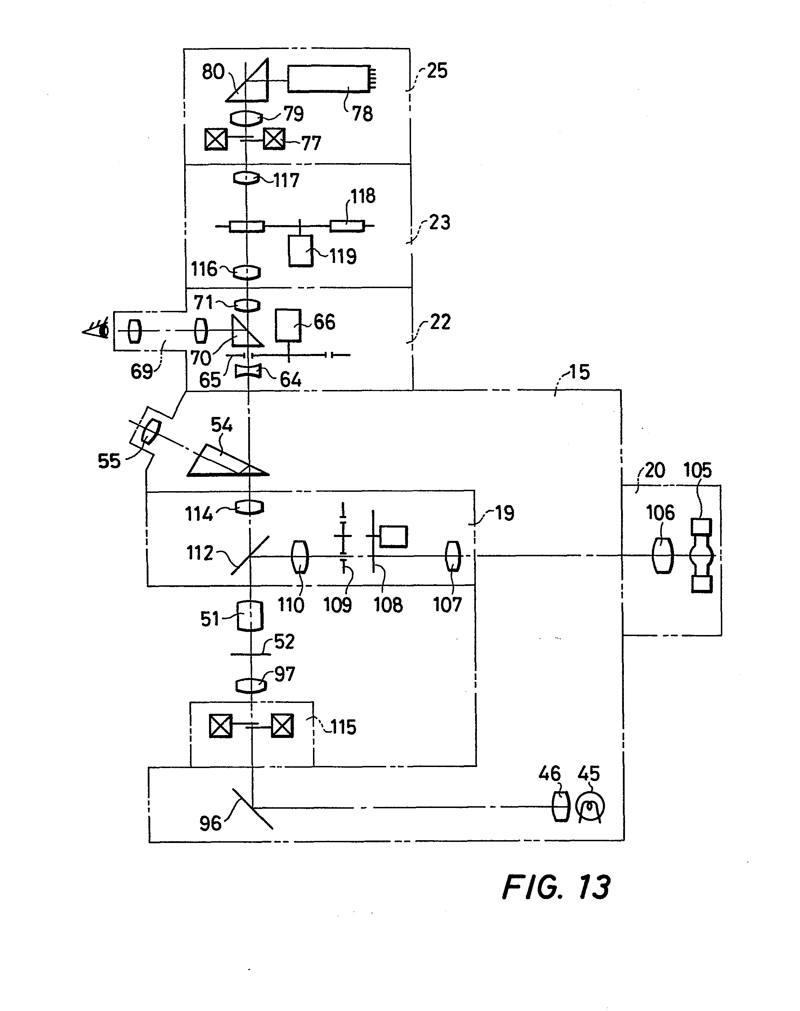

In Fig. 13, the spectroscope unit 24 in Fig. 12 is replaced
with the filter unit 23 and it is intended to quantitatively
measure a fluorescence. Lenses 116 and 117 optically acting
the same as the  spectroscope unit 24 are arranged within
the filter unit 23. A filter turret 118 to which a plurality
of filters having specific characteristics are fitted
is  located between those lenses so that any filter may
be inserted into the light path by the electric motor 119.
The filter unit driver 29 is connected also to this filter unit 23 so as to be able to be controlled by the system controller 27 through it.

In the spectrophotometry in Fig. 12, the variation of the intensity over the entire wave length of the fluorescent light is to be specifically noted, whereas, in the quantitative photometry in Fig. 13, the variation of the intensity of the fluorescent light in a specific wave length, the difference between the samples, variation in the time and variation in the state are to be measured as objects. Particularly, it is a feature of the filter unit 23 that the light can be quickly measured between a plurality of specific wave lengths.

The other detailed explanations shall be omitted. In the photoelectric converting system, it is also possible to use a unit using a photodiode, a photon counting unit 26 (Fig.3) using a photon counting by a photoelectronic multiplying tube (photomultiplier) and a unit containing an element sensitive not only to visible lights but also to other lights (for example, a ultraviolet ray detector and infrared ray detector). Also , a spectral system using a continuous interference filter and a spectroscope using a prism are considered. Further, a rapid scanning unit 41 (Fig.3) spectroscopically  measuring the light at a high speed in the form of combining a spectral system and photoelectric converting system and such unit as contains a plurality of photoelectric converters and spectral elements and simultaneously measures lights of many wave lengths can be also used. On the other hand, in the illuminating system, it is possible to use a transmitted fluorescence unit and polarized illumination unit besides the above described units. In short, the present system can provide an integrated photometric microscope device which will be able to be used for many uses by various combinations if only the fundamental outer specifications are unified among the respective specifications on a photoelectric converting

system, spectral system und illuminating system. Further, the present system can provide a device having no error and simple in the usage manner, since the respective units are organically integrated with one another by connecting unit drivers and system controller 27 to the respective units and giving a proper program.

Further, though not directly related with the light measurement, the scanning stage 40 (Fig.3) moving the sample 52 can be combined in the present system so as to automate the measurement.

As described above, the integrated photometric microscope system according to the present invention is economical, because only units, drivers and software may be added to correspond to various measurement purposes. In order to add an unanticipatable new specification, only the unis relating to the specification may be changed. Therefore, there is also an advantage that a device of a new specification can be developed economically within a short time. The respective units are separated but are integrated with the control box and therefore operate as closely related with one another. As a result, neither misoperation nor mismeasurement occurs and the operation is very simple. Even if the devices for various purposes are combined in the formation, as the operating methods are unified, there will be no trouble and the operation will be simpler.

Claims

1. An integrated photometric microscope system comprising a microscope body (15), a plurality of kinds of illuminating means (1) attachable to said microscope body (15), a plurality of kinds of wave length selecting means (2) attachable to said microscope body (15), a plurality of kinds of photoeletric converting means (3) attachable to said microscope body (15) and a system controller (8) integrating said attached respective means as organically related with one another when one selected kind of said illuminating means (1), one selected kind of said wave length selecting means (2) and one selected kind of said photoelectric converting means (3) are attached to said microscope body (15).

2. An integrated photometric microscope system according to claim 1 wherein said selected illuminating means (1) is any one of a transmitted light illumination unit (16), incident light illumination unit (18) and incident fluorescence illumination unit (19).

3. An integrated photometric microscope system according to claim 1 or 2 wherein said selected wave length selecting means (2) is any of a filter unit (23) and spectroscope unit (24).

4. An integrated photometric microscope system according to one of the claims 1 to 3 wherein said selected photoelectric converting means (3) is any of a photoelectronic multiplying tube (25) und photon counting photoelectronic multiplying tube unit (26).

5. An integrated photometric microscope system according to one of the claims 1 to 4 further comprising a remote controller (11) connected so said system controller (8).

0164680

6. An integrated photometric microscope system according to one of the claims 1 to 5 further comprising a host computer (10) connected to said system controller (8) through an interface (9).

0164680

FIG. 1

0 164 680

```
┌─────────────────────┐
│   POWER SOURCE ON   │
└─────────────────────┘
           │
           ▼
┌─────────────────────┐
│   CONFIRMATION OF   │
│   SYSTEM            │
└─────────────────────┘
           │
           ▼
┌─────────────────────┐
│   INITIALIZATION OF │
│   RESPECTIVE MEANS  │
└─────────────────────┘
           │
           ▼
┌─────────────────────┐
│   ACTUAL MEASURING  │
│   PROGRAM           │
└─────────────────────┘
           │
           ▼
┌─────────────────────┐
│   INITIALIZATION OF │
│   RESPECTIVE        │
│   DRIVERS           │
└─────────────────────┘
           │
           ▼
┌─────────────────────┐
│        END          │
└─────────────────────┘
```

*FIG. 2*

FIG. 3

FIG. 4

| NO. | CODE | DIAMETER OF DIA-PHRAGM | DIAMETER OF PIN-HOLE IMAGE | OBJECTIVE DIAMETER OF PIN-HOLE IMAGE IN USE |
|-----|------|------------------------|----------------------------|---------------------------------------------|
| 1 | 0001 | 0.25 | 0.15 | 1 |
| 2 | 0010 | 0.325 | 0.225 | 1.5 |
| 3 | 0011 | 0.400 | 0.300 | 2 |
| 4 | 0100 | 0.550 | 0.450 | 3 |
| 5 | 0101 | 0.900 | 0.750 | 5 |
| 6 | 0110 | 1.35 | 1.125 | 7.5 |
| 7 | 0111 | 1.80 | 1.50 | 10 |
| 8 | 1000 | 2.70 | 2.25 | 1.5 |
| 9 | 1001 | 3.60 | 3.00 | 20 |
| 10 | 1010 | 5.40 | 4.50 | 30 |
| 11 | 1011 | SUBSTITU-TIONAL | SUBSTITU-TIONAL | SUBSTITU-TIONAL |
| 12 | 0000 | FULL OPEN | FULL OPEN | FULL OPEN |
|    |      | ( mm ) | ( mm ) | ( μm ) |

*FIG. 5*

*FIG. 6*

*FIG. 8*

FIG. 7

PLEASE CHANGE
PINHOLE

*FIG. 9A*

PUSH ANY KEY
TO MEASURE

*FIG. 9B*

BACK    REF
        SAMPLE

*FIG. 9C*

MODE 1  MODE 2  MODE 3
MODE 4        END

*FIG. 9D*

| DRIVER UNIT NAMES | OUTPUTS TO DRIVER UNITS | INPUTS FROM DRIVER UNITS |
|---|---|---|
| INCIDENT LIGHT ILLUMINATION UNIT DRIVER | CHOPPER ROTATING CLOCK<br>ENTIRE ILLUMINATION SHUTTER CONTROL<br>PANEL INDICATING SIGNAL | PINHOLE SORTING CODE<br>CHOPPER SIGNAL |
| TRANSMITTED LIGHT ILLUMINATION UNIT DRIVER | CHOPPER ROTATING CLOCK<br>ENTIRE ILLUMINATION SHUTTER CONTROL<br>PANEL INDICATING SIGNAL | PINHOLE SORTING CODE<br>CHOPPER SIGNAL |
| FLUORESCENCE ILLUMINATION UNIT DRIVER | CHOPPER ROTATING CLOCK<br>EXCITING UNIT SELECTING SIGNAL | PINHOLE SORTING CODE<br>CHOPPER SIGNAL<br>EXCITING LIGHT INTENSITY SIGNAL |
| DIAPHRAGM UNIT DRIVER | DIAPHRAGM SELECTING SIGNAL | DIAPHRAGM OBSERVING LIGHT PATH NOTIFYING SIGNAL |
| FILTER UNIT DRIVER | FILTER NUMBER SELECTING SIGNAL | |
| SPECTROSCOPE UNIT DRIVER | SPECTROSCOPE DRIVING MOTOR SIGNAL | SPECTROSCOPE WAVE LENGTH SIGNAL<br>SPECTROSCOPE SLIT WIDTH SIGNAL |
| AMPLIFIER | LIGHT MEASUREMENT BEGINNING<br>INTEGRATED TIME SETTING DATA<br>AMPLIFIER CHANNEL SETTING | MEASURED DATA<br>MEASUREMENT END SIGNAL |
| PHOTON COUNTER | LIGHT MEASUREMENT BEGINNING<br>INTEGRATED TIME SETTING DATA | MEASURED DATA<br>MEASUREMENT END SIGNAL |

*FIG. 10*

0164680

0164680

READ PINHOLE DIAMETER
OF ILLUMINATING MEANS

SELECT CORRESPONDING
DIAPHRAGM

SET INTEGRATED TIME
ON AMPLIFIER

DIAPHRAGM
OBSERVING LIGHT
PATH
?

Y

N

WARNING

SET MICROSCOPE PRISM
IN LIGHT MEASURING
POSITION

ENTIRE ILLUMINATING
LIGHT SHUTTER CLOSES

PHOTOMUL IMPRESSED
VOLTAGE
ON

ILLUMINATING MEANS
CHOPPER ROTATES

MOVE SPECTROSCOPE TO
MEASUREMENT BEGINNING
WAVE LENGTH

SHUTTER BEFORE PHOTO-
MUL OPENS

ADVANCE WAVE
LENGTH OF
SPECTROSCOPE

MEASURE LIGHT AMOUNT

MEASUREMENT
END WAVE LENGTH
?

N

Y

A

FIG. 11A

```
       A
       │
┌──────┴──────────────┐
│ SHUTTER BEFORE PHOTOMUL │
│       CLOSES          │
└──────┬──────────────┘
       │
┌──────┴──────────────┐
│ CHOPPER OF ILLUMINATING │
│ MEANS STOPS IN OPEN    │
│ POSITION              │
└──────┬──────────────┘
       │
┌──────┴──────────────┐
│ PHOTOMUL IMPRESSED VOLT- │
│ AGE                   │
│       OFF             │
└──────┬──────────────┘
       │
┌──────┴──────────────┐
│ ENTIRE ILLUMINATION    │
│       ON              │
└──────┬──────────────┘
       │
┌──────┴──────────────┐
│ SET MICROSCOPE PRISM IN │
│ OBSERVING POSITION     │
└──────┬──────────────┘
       │
       ▼
```

*FIG. 11B*

FIG. 12

FIG. 13